# EUROPEAN PATENT APPLICATION

(11) **EP 4 322 335 A1**
(43) Date of publication of application: **14.02.2024**
(21) Application number: 22189185.6
(22) Date of filing: 08.08.2022
(51) Int. Cl.: H01Q 13/18, H01Q 1/22, F21S 8/04, F21V 23/04

(54) **INSTALLATION HOUSING**

(71) Applicant: Zumtobel Lighting GmbH, 6850 Dornbirn (AT); Tridonic GmbH & Co. KG, 6851 Dornbirn (AT)
(72) Inventor: Mayrhofer, Markus, 6850 Dornbirn (AT); Zengerle, Thomas, 6850 Dornbirn (AT); Lorenz, Stefan, 6850 Dornbirn (AT); Block, Steffen, 6850 Dornbirn (AT)
(74) Representative: Beder, Jens

(57) **Abstract**

The present invention relates to an installation housing for an electronic device comprising an antenna, wherein the installation housing (1) is configured for installation in a building structure or a building technology device (19) and is configured to position the electronic device (12) within the installation housing.

## Description

The invention relates to the transmission of control signals or other signals in building automation. More specifically, the invention relates to the integration of radio transmitter and/or receiver in a building structure or a building technology device.

In building automation, a controller sends commands and control signals to lighting or other devices based on sensor signals indicating brightness, temperature, humidity, presence of persons and other essential elements, wherein the signals are transmitted by wireless link or cable. Radio transmission of information or data is usually performed by using separate transceivers connected by cable to the control and sensor devices or by transceiver modules integrated into the devices.

Further, the system can support data transmission not related to the building automation or lighting control. US 2005/0242290 A1 discloses a lighting system, in which a wireless network module is integrated into a ceiling lamp to provide Internet access.

However, the quality and range of the radio connection depends on spatial conditions. In particular, if the transceiver is integrated into the building structure (e.g., a wall or ceilings made of reinforced concrete) or in a device (e.g., luminaire with metal housing) for example for aesthetic reasons, metallic components of the device or the building structure can affect the transmission range. On the other hand, the transceiver may interfere with other electronic components of the device in which it is installed. To prevent this, metallic and/or electronic components must be identified and, if necessary, protective measures (e.g., safety distance or shielding) must be taken.

It is an object of the present invention to overcome the above-mentioned drawbacks and to provide an improved system. More specifically, it is an object of the invention to provide an apparatus and a lighting system, with which an electronic device comprising an antenna (radio transmitter and/or receiver) can be installed in a building structure or a building technology device with low effort and costs.

This object is achieved by an installation housing and a lighting system according to the enclosed independent claims. Advantageous features of the present invention are defined in the corresponding dependent claims.

According to the present invention, an installation housing for an electronic device comprising an antenna is provided. The installation housing is configured for installation in a building structure or a building technology device and comprises a positioning means for positioning the electronic device within the installation housing.

The installation housing is an enclosure for the electronic device that provides defined transmitting and receiving conditions for the device's antenna(s), regardless of the local conditions at the installation site. In this way, the electronic device can be installed in a building structure or a building technology device with low effort and costs.

The electronic device can be Wi-Fi, Bluetooth, Thread or Matter transmitter that transmits radio signals, for example, using short-wavelength UHF radio waves in the ISM band from 2,4 to 2,485 GHz. The antenna can be a monopole antenna or a dipole antenna. The radio signals can be transferred between components of a lighting system or forwarded by the lighting system.

The electronic device can be inserted into the installation housing by a manufacturer or by the installer on site. Preferably, the installation housing is configured to position the electronic device at different positions within the installation housing, which allows for optimal positioning of the respective electronic device.

In order to suppress interference from metallic components of the building structure or the building technology device, the installation housing can be configured to position the electronic device so that the antenna has a distance of ≥ λ/4 to at least one inner or outer side of the installation housing.

The installation housing can be rectangular-shaped or cylindrical. Preferably, the installation housing is a block-shaped scaffold framework, whose sides are closed with removable panels.

The installation housing can comprise or can be formed by a plurality of housing sides, wherein at least one housing side (e.g., the panel) is detachable from the installation housing.

Alternatively or in addition, at least one housing side of the plurality of housing sides can be at least partially made of non-metal, so that a radio signal sent by the antenna can be passed through the at least one housing side.

In addition, the installation housing can comprise a reflector for reflecting a radio signal sent by the antenna and passed through the at least one housing side.

One or more housing sides may be at least partially made of metal to prevent the radio signal from radiating in an undesirable direction. Alternatively, the housing side can provide a secondary antenna coupled to the antenna of the electronic device (primary antenna), wherein the housing side that is at least partially made of metal comprises a window or slot for emitting a radio signal sent by the antenna. In addition, the window or the slot can be filled with a dielectric material to improve radiation coupling or matching, especially when the installation housing is encased in concrete.

The installation housing can comprise a waveguide for transmitting a radio signal sent by the antenna and/or a cavity resonator for filtering the radio signal sent by the antenna, wherein the waveguide and/or the cavity resonator is at least partially formed by at least one housing side of the plurality of housing sides.

Alternatively or in addition, the installation housing enclosing the electronic device can be at least partially filled with a dielectric material to reduce the size/dimension of the installation housing and/or to increase its strength.

According to the present invention, a lighting system comprises at least one mounting rail for carrying luminaires, the installation housing and the electronic device, wherein the installation housing enclosing the electronic device is installed in the at least one mounting rail.

In addition, the installation housing can be configured to direct a radio signal sent by the antenna to a receiver located in or outside the at least one mounting rail.

Alternatively or in addition, the at least one mounting rail can comprise a waveguide for transmitting the radio signal, wherein the installation housing is connected to the waveguide or is a part of the waveguide.

The invention will now be explained in more detail with reference to the accompanying drawings, wherein:
FIG. 1 shows an installation housing according to a first embodiment of the present invention in a sectional view,
FIG. 2 shows the installation housing shown in FIG. 1 from a top view,
FIG. 3 shows a lighting system comprising the installation housing shown in FIG. 1 in side view,
FIG. 4 shows an installation housing according to a second embodiment of the present invention from a top view, and
FIG. 5 shows a lighting system comprising an installation housing according to a third embodiment of the present invention in side view.

The same features are denoted by the same reference signs throughout all figures.

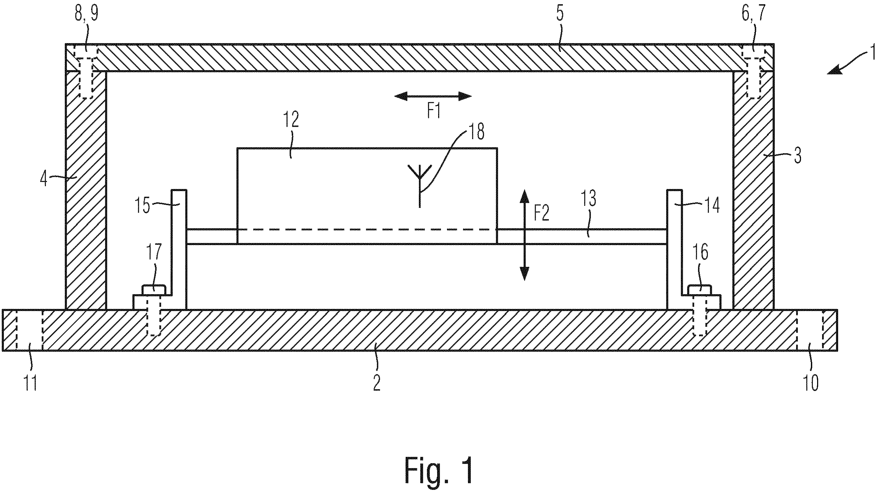

FIG. 1 shows an installation housing 1 according to a first embodiment of the present invention. The installation housing 1 shown in FIG. 1 has the shape of a rectangular block and consists of a base plate 2, four sidewalls 3, 4 and a removable cover plate 5, all of which are made of a non-conductive material. The base plate 2 can be casted in one piece with the four sidewalls 3, 4.

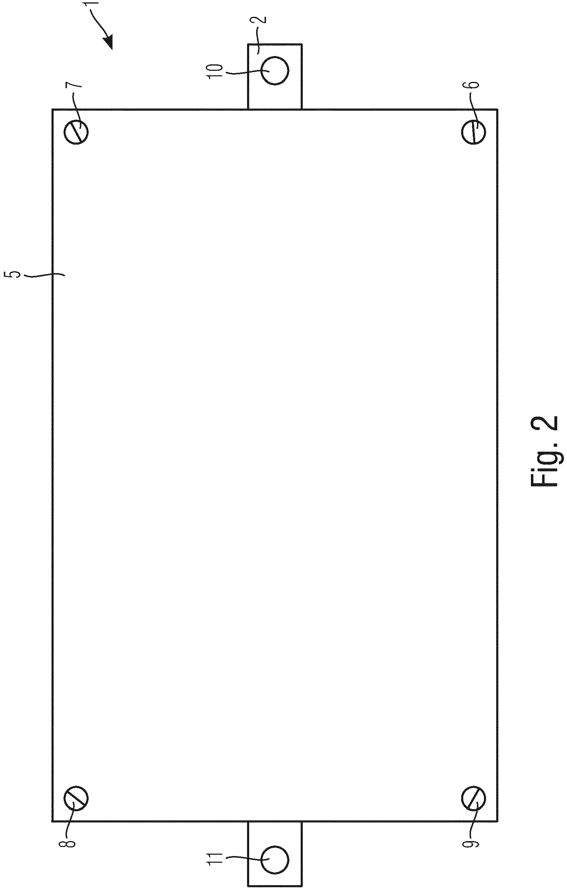

The cover plate 5 is mounted on the top of installation housing 1 with four screws 6..9 as shown in FIG. 2. The base plate 2 has two through-holes 10, 11 by means of which the installation housing 1 can be mounted in or to a building technology device or on a concrete formwork panel (not shown).

An RF transceiver 12 is enclosed by the installation housing 1, which is transparent to RF transmission/reception and provides a safety area around the transceiver 12 with respect to potential elements interfering with the RF transmission/reception. The installation housing 1 comprises a mounting bracket 13..15 for fixing the transceiver 12 within the installation housing 1 at a desired position and cable bushing for supply and data cables (not shown). The mounting bracket 13..15 consists of, for example, a bar 13, on which the transceiver 12 can be mounted at various positions in the horizontal direction Fi, and two support arms 14, 15 fastened to the base plate 2 by means of screws 16,17. The bar 13 held by the support arms 14, 15 can be repositioned in the vertical direction F2. The flexible positioning by the mounting bracket 13..15 allows adaptation to different transceivers 12.

The transceiver 12 is a Bluetooth, Thread, Matter or Wi-Fi transceiver that operates, for example, at 2,4 GHz and transmits a radio signal using a wavelength, for example,of X of 125 mm. Other frequencies or transmission standards may be used as well. An antenna symbol 18 on the housing of the transceiver 12 marks the position of the antenna located in the RF transceiver 12, wherein the transceiver 12 shown in FIG. 1 is positioned so that the antenna of the transceiver 12 is located in the center of the installation housing 1. Alternatively, the transceiver 12 can be positioned so that the antenna or the housing of the transceiver 12 has a distance ≥λ/4 to each of the base plate 2, the sidewalls 3, 4 and the cover plate 5. This ensures that there are no metallic objects near the antenna when the installation housing 1 is installed at the site.

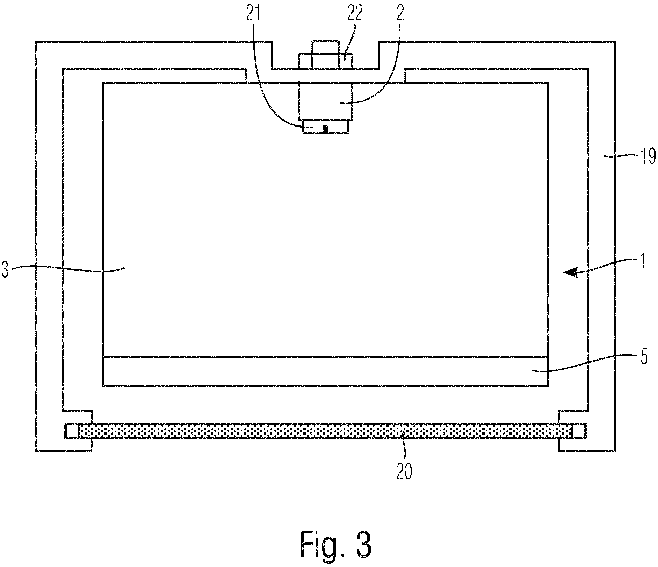

FIG. 3 shows the installation housing 1 installed in a mounting rail 19 for carrying luminaires and/or other devices. The metallic mounting rail 1 can be made of extruded metal or deep-drawn sheet metal and is covered on its underside with a non-conductive plate 20. The installation housing 1 is fixed to the mounting rail 19 by a screw connection 21, 22 and encloses the transceiver 12, with which control and/or other signals can be transmitted to a receiver located in or outside the mounting rail 19. Alternatively or in addition, the transceiver 12 can receive a command to switch on/off luminaires mounted on the mounting rail 19 and output the command to a control unit/gear of the luminaires via cable (not shown).

The installation housing 1 shown in FIG. 1 is made of a non-conductive/metallic material that is transparent to radio transmission/reception in all directions. However, if a radio link is only between the transceiver 12 and a device located outside the mounting rail 19, radiation of the radio signal into the mounting rail 19 should be suppressed.

For this purpose, a shield can be attached to the installation housing 1 that directs the radiation emerging from the sidewalls 3, 4 downward, i.e., towards the plate 20. Alternatively, the sidewalls 3, 4 or even the base plate 2 can be made of a metallic material (e.g., aluminum, steal), wherein the cover plate 5 is made of the non-conductive/metallic material. This also reduces interference to the transceiver 12 from EM fields generated by electronic devices located in the mounting rail 19.

The installation housing 1 can consist of exchangeable conductive/non-conductive sides (e.g., the sidewalls 3, 4, the base plate 2 and/or the cover plate 5) so that the combinations of conductive and/or non-conductive sides enables the installation housing 1 more flexibility and provides a large number of solutions for different applications. It is particularly preferred that, a conductive/metallic plate is attachable to at least one side of the installation housing 1, which is made of a non-conductive/metallic material, by a clamp or screwed connection.

The installation housing 1 may be waterproof, which is advantageous when used in liquid concrete. Alternatively, the side of the installation housing 1 that is located in a desired radiation direction (e.g., the cover plate 5 in FIG. 3) may be open or have an opening.

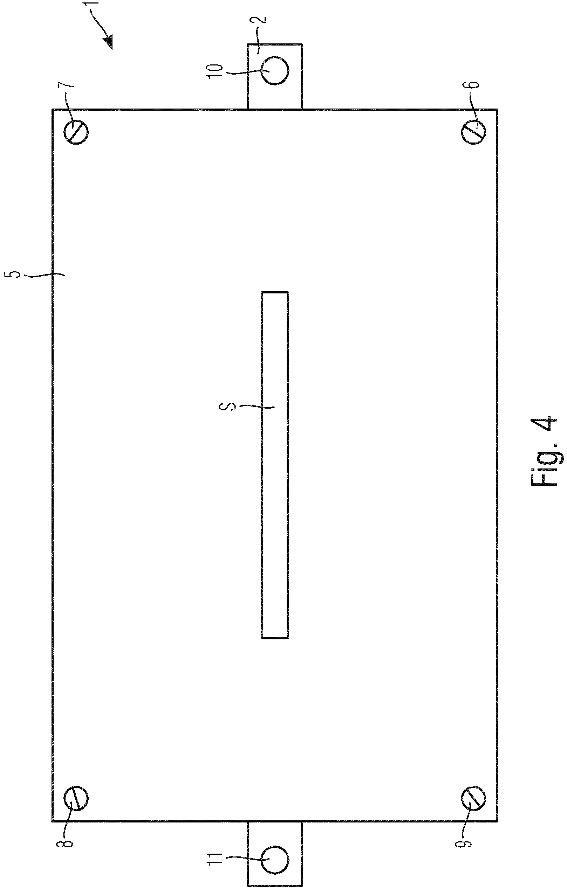

Further, wave-guiding structures (reflectors, slot-arrays ...) maybe present in the installation housing 1 or may be attached to one or more of the sides. FIG. 4 shows an installation housing 1 according to a second embodiment of the present invention, in which the base plate 2, the four sidewalls 3, 4 (not shown) and the cover plate 5 are made of a metallic material, and the cover plate 5 comprises a slot to radiate electromagnetic waves in a way similar to a dipole antenna. The installation housing 1 shown in FIG. 4 forms a slot antenna for emitting a radio signal sent by the antenna of the transceiver 12.

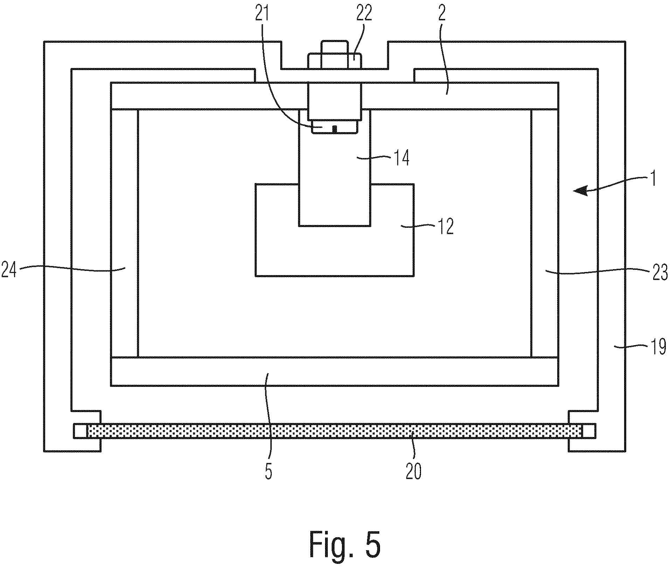

FIG. 5 shows an installation housing 1 according to a third embodiment of the present invention installed in the mounting rail 19. The installation housing 1 shown in FIG. 4 consists of the base plate 2, the cover plate 5 and two sidewalls 23, 24, all of which are made of a metallic material, so that the installation housing 1 is open on the two opposite sides in the main direction of extension of the installation housing 1, i.e., sidewalls 3, 4 shown in FIG. 1 are no longer present. The remaining housing parts form a waveguide for transmitting the radio signal send by the antenna of the transceiver 12 to a receiver located in the mounting rail 19. It is particularly preferred that, the installation housing 1 and the mounting rail 19 form a waveguide, wherein at least one opening of the installation housing 1 is electrically connected (e.g., flange-mounted) to the mounting rail 19.

## Claims

1. An installation housing for an electronic device comprising an antenna, wherein
the installation housing (1) is configured for installation in a building structure or a building technology device (19) and is configured to position the electronic device (12) within the installation housing.

2. The installation housing according to claim 1, wherein
the installation housing (1) is configured to position the electronic device (12) at different positions within the installation housing (1).

3. The installation housing according to claim 1 or 2, wherein
the antenna is configured to send and/or receive a radio signal having a wavelength λ and the installation housing (1) is configured to position the electronic device (12) so that the antenna has a minimum distance of λ/4 to at least one inner or outer side of the installation housing (1).

4. The installation housing according to any one of preceding claims, wherein
the installation housing (1) comprises or is formed by a plurality of housing sides (3, 4, 23, 24); and
at least one housing side of the plurality of housing sides (3, 4, 23, 24) is detachable from the installation housing (1).

5. The installation housing according to any one of preceding claims, wherein
the installation housing (1) comprises or is formed by a plurality of housing sides (3, 4, 23, 24); and
at least one housing side of the plurality of housing sides (3, 4, 23, 24) is at least partially made of non-metallic material.

6. The installation housing according to claim 5, wherein
the installation housing (1) comprises a reflector for reflecting a radio signal sent by the antenna and passed through the at least one housing side.

7. The installation housing according to any one of preceding claims, wherein
the installation housing (1) comprises or is formed by a plurality of housing sides; and
at least one housing side of the plurality of housing sides (3, 4, 23, 24) is at least partially made of metal.

8. The installation housing according to claim 7, wherein
the at least one housing side that is at least partially made of metal comprises a window (17..19, 23) or slot for emitting a radio signal sent by the antenna.

9. The installation housing according to claim 8, wherein
the window (17..19, 23) or the slot is filled with a dielectric material

10. The installation housing according to any one of preceding claims, wherein
the installation housing (1) comprises or is formed by a plurality of housing sides (3, 4, 23, 24);
the installation housing comprises a waveguide (13, 14) for transmitting a radio signal sent by the antenna; and
the waveguide is at least partially formed by at least one housing side of the plurality of housing sides.

11. The installation housing according to any one of preceding claims, wherein
the installation housing (1) comprises or is formed by a plurality of housing sides (3, 4, 23, 24);
the installation housing (1) comprises a cavity resonator tuned to a radio signal sent by the antenna; and
the cavity resonator is at least partially formed by at least one housing side of the plurality of housing sides (3, 4, 23, 24).

12. The installation housing according to any one of preceding claims, further comprising
the electronic device; wherein
the installation housing (1) enclosing the electronic device (12) is at least partially filled with a dielectric material.

13. Lighting system, comprising
at least one mounting rail (19) for carrying luminaires;
the installation housing (1) according to any one of preceding claims; and
the electronic device (12); wherein
the installation housing (1) enclosing the electronic device is installed in the at least one mounting rail (19).

14. The lighting system according to claim 13, wherein
the installation housing (1) is configured to direct a radio signal sent by the antenna to a receiver located in or outside the at least one mounting rail (19).

15. The lighting system according to claim 14, wherein
the at least one mounting rail (19) comprises a waveguide for transmitting the radio signal; and
the installation housing (1) is connected to the waveguide or is a part of the waveguide.
